# EUROPÄISCHE PATENTSCHRIFT

(11) **EP 0 615 265 B1**
(45) Veröffentlichungstag und Bekanntmachung des Hinweises auf die Patenterteilung: **26.11.1997**
(21) Anmeldenummer: 94103143.7
(22) Anmeldetag: 03.03.1994
(51) Int. Cl.: H01H 13/70, H01H 11/00, B29C 45/14

(54) **Gehäuseteil mit Drucktastenschalter und Herstellungsverfahren dafür**
Case part with push button switch and method of manufacture
Partie de boîtier avec interrupteur à bouton poussoir et méthode de fabrication

(30) Priorität: 12.03.1993 DE 4307909
(43) Veröffentlichungstag der Anmeldung: 14.09.1994
(73) Patentinhaber: Marquardt GmbH, 78604 Rietheim-Weilheim (DE)
(72) Erfinder: Sachs, Ekkehard, D-78549 Spaichingen (DE)
(74) Vertreter: Patentanwälte Eisele, Otten & Roth

(56) Entgegenhaltungen:
- EP-A- 0 509 368
- DE-A- 3 041 186
- DE-A- 3 836 458
- DE-A- 4 220 214
- GB-A- 2 251 529
- GB-A- 2 253 586
- GB-A- 2 264 393
- PATENT ABSTRACTS OF JAPAN vol. 13, no. 243 (E-768) (3591) 7. Juni 1989 & JP-A-01 045 029 (SEIKO EPSON CORP.)

## Beschreibung

Die Erfindung betrifft ein aus Kunststoff bestehendes Gehäuseteil nach dem Oberbegriff des Patentanspruchs 1 sowie ein Verfahren zur Herstellung eines derartigen Gehäuseteils nach Patentanspruch 21.

Elektronische und elektrische Geräte, wie Fernbedienungen für Geräte der Unterhaltungselektronik, Taschenrechner, u. dgl. besitzen ein Gehäuseteil, das zur Aufnahme der elektronischen Schaltung, von Anzeigeelementen, usw. dient. Am Gehäuseteil befinden sich Druckschalter, mit deren Hilfe die Auslösung von bestimmten Funktionen des Geräts vorgenommen wird.

Derartige Gehäuseteile bestehen aus hartem Kunststoff und werden in der Regel durch Spritzgießen hergestellt. Aus der DE-OS 41 12 754 ist es bekannt, die am Gehäuseteil befindlichen Druckschalter mit einer als Rückstellelement wirkenden Schalterkappe aus einer weiteren, im allgemeinen weicheren Kunststoff-Spritzmasse zu versehen. Diese Schalterkappe weist einen am Gehäuseteil befestigten Basissockel und einen als Betätigungsorgan zur Überbrückung von Festkontakten dienenden Deckel sowie eine den Basissockel und den Deckel verbindende flexible dünnwandige Membran auf.

Nachteilig bei diesem bekannten Gehäuseteil ist, daß sowohl das Gehäuseteil als auch die Schalterkappen in einem separaten Spritzvorgang mit getrennten Formen hergestellt werden. Anschließend werden dann die Schalterkappen für die Druckschalter in das Gehäuseteil eingesetzt. Daraus resultieren zum einen höhere Kosten aufgrund der notwendigen Formen sowie zum anderen erhöhte Montagekosten.

Beim Zusammensetzen der Einzelteile können Justageprobleme auftreten. Im übrigen besteht aufgrund der vielen Einzelteile eine vergrößerte Gefahr des Funktionsausfalls bei einem derartig zusammengesetzten Geräteteil. Außerdem ist die optische Wirkung des zusammengesetzten Geräteteils vermindert.

Es ist daher auch schon versucht worden, wie auch in einem Ausführungsbeispiel der DE-OS 41 12 754 beschrieben ist, das Gehäuseteil mit integrierten Schalterkappen durch einen einzigen Spritzvorgang in einer Form herzustellen. Dies scheitert jedoch daran, daß dann ein weicher, für die Schalterkappen geeigneter Kunststoff zu verwenden ist, wodurch dem Gehäuseteil die notwendige Stabilität fehlt.

Aus der GB-A-2 253 586 (nächstliegender Stand der Technik) ist eine Tastatur bekannt, die eine aus elastomerem Material bestehende Schaltmatte mit integrierten Schalterkappen und Drucktasten aufweist. Die Schaltmatte ist an einem Gehäuse mit Öffnungen für die Drucktasten angeordnet. Zur Herstellung dieser Tastatur kann zunächst das Gehäuse gespritzt werden, anschließend das Gehäuse in die Spritzform für die Schaltmatte eingelegt und danach die Schaltmatte an das Gehäuse angespritzt werden.

Weiter ist aus der GB-A-2 251 529 ein Gehäuse mit einer Tastatur bekannt. Die Tastatur besteht aus einer aus einem elastischem Kunststoff hergestellten Schaltmatte mit integrierten Schalterkappen und Drucktasten, die durch Öffnungen im Gehäuse ragen. Zur Herstellung der Tastatur wird das Gehäuse mit den Öffnungen für die Drucktasten in einer Spritzgießform gespritzt. Anschließend wird die untere Formhälfte der Spritzgießform durch eine weitere Formhälfte für die Herstellung der Schaltmatte ersetzt, wobei das Gehäuse in der Spritzgießform verbleibt. Danach wird die Schaltmatte an das Gehäuse in der Spritzgießform angespritzt.

Sowohl bei der in der GB-A-2 253 586 beschriebenen Tastatur als auch bei der Tastatur nach der GB-A-2 251 529 wird die Schaltmatte an das zuvor hergestellte Gehäuse angespritzt. Damit die Schalterkappen der Schaltmatte beweglich sind, müssen die die Drucktasten aufnehmenden Öffnungen im Gehäuse größer als die eigentlichen Schalterkappen dimensioniert werden. Daher wird für die Bereiche, in denen sich die Schalterkappen befinden, eine entsprechende Ausgestaltung der Spritzgießform notwendig. Dies verkompliziert die Spritzgießform, wodurch die Herstellung des Gehäuseteils mit der Tastatur verteuert wird und die Rate der Ausschußbildung ansteigen kann. Da die Befestigung der Schaltmatte am Gehäuse durch die Verbindung der beiden Kunststoffe von Schaltmatte und Gehäuse beim Anspritzen erfolgt, besteht zudem die Gefahr, daß nach einer gewissen Gebrauchsdauer eine Ablösung der Schaltmatte vom Gehäuse auftreten kann. Dadurch sind vorzeitige Ausfälle dieser Tastaturen zu befürchten.

Der Erfindung liegt die Aufgabe zugrunde, ein Geräteteil mit wenigstens einem Druckschalter, der eine Schalterkappe als Rückstellelement besitzt, so weiterzuentwickeln, daß auf eine separat ausgestaltete Form beim Spritzgießen für die Schalterkappen verzichtet werden kann.

Diese Aufgabe wird bei einem gattungsgemäßen Gehäuseteil durch die Mermale des Anspruchs 1 sowie bei einem Verfahren zur Herstellung eines derartigen Gehäuseteils durch die Merkmale des Anspruchs 21 gelöst.

Die mit der Erfindung erzielten Vorteile bestehen insbesondere darin, daß das Gehäuseteil eine geschlossene Oberfläche aufweist, in die die Drucktastenschalter integriert sind. Damit sind die Teile im Inneren des Gehäuseteils sowie die beweglichen Teile des Drucktastenschalters, insbesondere die dünne flexible Membran an der Schalterkappe, die eine gewisse Empfindlichkeit besitzt, vor Beschädigung sicher geschützt.

Da es sich bei dem Gehäuseteil mit den Druckschaltern um ein aus einem Stück bestehendes Teil handelt, treten keine Justageprobleme bei den Drucktastenschaltern auf. Zudem entfällt der Aufwand für eine separate Montage der Drucktastenschalter und es wird weiter eine Form bei der Herstellung eingespart, so daß die Fertigung der erfindungsgemäßen Gehäuseteile auch billiger ist.

Das geschlossene, aus einem Stück bestehende Gehäuseteil besitzt außerdem ein gefälliger wirkendes Aussehen. Dies kann insbesondere auch dadurch erreicht werden, daß der Deckel der Schalterkappe so ausgestaltet ist, daß sein Rand im unbetätigten Zustand im wesentlichen bündig mit der Außenoberfläche des Gehäuseteils ist. Gegebenenfalls kann dann noch die Oberfläche des Deckels gewölbt sein.

Weitere Ausgestaltungen der Erfindung sind Gegenstand der Unteransprüche. So ist es weiter besonders vorteilhaft für das Gehäuseteil einen harten Kunststoff, wie ABS, Polyamid, u.dgl. und für die Schalterkappen ein thermoplastisches Elastomer, wie beispielsweise ein Blockcopolymer, das aus einem harten kristallinen Segment aus Polybutylen-Terephtalat und einem weichen amorphen Segment auf der Basis langkettiger Polyetherglykole besteht, zu verwenden. Die Verarbeitung dieser beiden Kunststoff-Spritzmassen ist besonders einfach, da beide keine feste Verbindung untereinander beim Spritzgießen eingehen. Die Befestigung der Schalterkappen am Gehäuseteil wird dadurch sichergestellt, daß eine mechanische Verankerung durch an der Schalterkappe angeformte Halteteile in Kanälen des Gehäuseteils vorgesehen ist.

Im Bereich des Deckels der Schalterkappe, der u.a. als Betätigungsorgan des Druckschalters dient, kann am Gehäuseteil eine Führung für den Deckel ausgebildet sein. Als besonders geeignet hat sich dafür ein konischer Verlauf dieser Führungsflächen herausgestellt.

Ausführungsbeispiele der Erfindung sind in den Zeichnungen dargestellt und werden im folgenden näher beschrieben.

Es zeigen
- Fig. 1: ein Gehäuseteil in Frontansicht, das als Blende für ein Autoradio dient,
- Fig. 2: einen Schnitt gemäß der Linie 2-2 in Fig. 1 durch das Gehäuseteil,
- Fig. 3: einen Schnitt durch das Heft eines elektronischen Autoschlüssels gemäß einem weiteren Ausführungsbeispiel und
- Fig. 4: einen Schnitt durch das Gehäuseteil bei der Herstellung.

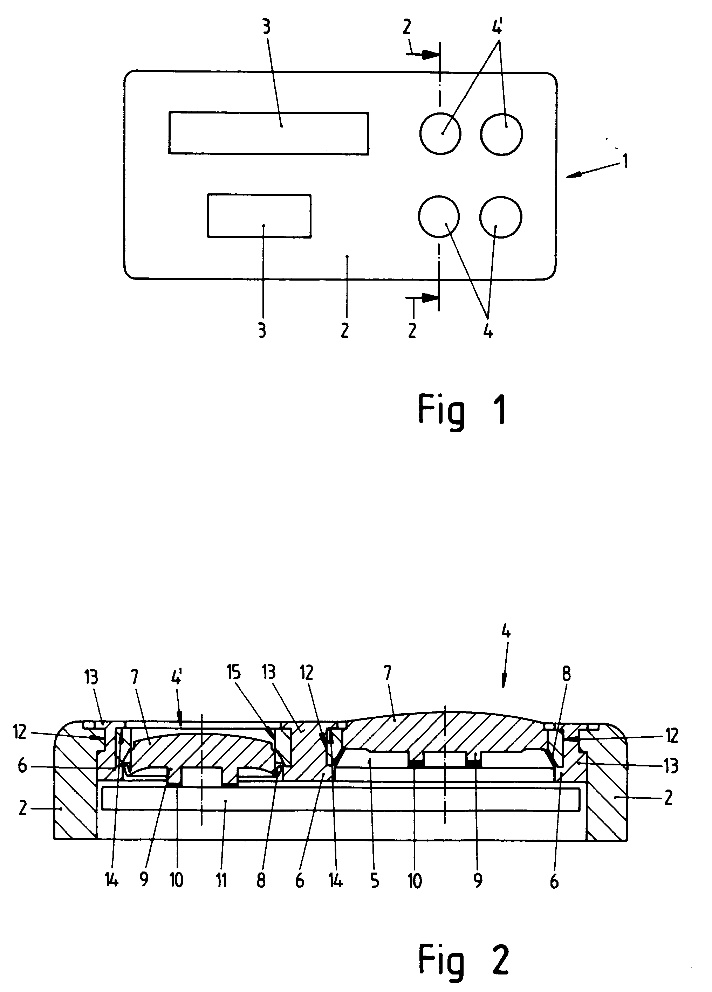

Als erstes Ausführungsbeispiel für ein erfindungsgemäßes Gehäuseteil 1 ist in Fig. 1 eine Frontblende für ein Autoradio schematisch gezeigt. Das Gehäuseteil 1, für das ein erster, im allgemeinen harter Kunststoff verwendet ist, beispielsweise ABS, Polyamid o. dgl., besteht aus einem Rahmen 2 mit Öffnungen 3 für die Stationsanzeige, Cassettenschacht, usw.. Weiter befinden sich im Gehäuseteil 1 mehrere Drucktastenschalter 4, 4', die als Stationsanwahltasten, zur Steuerung des Cassettenrecorders, u.dgl. dienen.

Wie weiter aus der Fig. 2 zu entnehmen ist, bestehen die Drucktastenschalter 4, 4' aus einer als Rückstellelement wirkenden Schalterkappe 5, die sich aus einem am Gehäuseteil 1 befestigten Basissockel 6 und einem Deckel 7 sowie einer den Basissockel 6 und den Deckel 7 verbindenden flexiblen dünnwandigen Membran 8 zusammensetzt. Der in Fig. 2 rechts angeordnete Drucktastenschalter 4 ist in unbetätigtem Zustand und der linke Drucktastenschalter 4' in betätigtem Zustand gezeigt.

Als Material für die Schalterkappe 5 wird eine zweite Kunststoff-Spritzmasse, die von dem ersten Kunststoff verschieden ist, vorzugsweise ein thermoplastisches Elastomer, verwendet. Beispielsweise eignet sich besonders gut dafür ein Blockcopolymer, das zum einen aus einem kristallinen Segment aus Polybutylen-Terephtalat und zum anderen aus einem weichen, amorphen Segment auf der Basis langkettiger Polyetherglykole besteht. Ein derartiges thermoplastisches Elastomer wird von der Fa. Du Pont unter dem Markennamen "HYTREL" vertrieben.

Der Rahmen 2 des Gehäuseteils 1 ist derart ausgestaltet, daß er als Form dient, in die die Schalterkappen 5 entsprechend der Ausbildung mit Basissockel 6, Membran 8 und Deckel 7 eingespritzt sind. Aufgrund der Materialauswahl für die Kunststoffe des Rahmens 2 und der Schalterkappen 5 wird sichergestellt, daß wenigstens im Bereich der Membran 8 und des Deckels 7 der Schalterkappe 5 keine feste Verbindung zum Gehäuseteil 1 besteht. Vielmehr liegt dort die Schalterkappe 5 gestützt am Rahmen 2 an. Dadurch läßt sich der Deckel 7 der Schalterkappe 5 durch Druckeinwirkung bei der Betätigung in das Innere des Gehäuseteils 1 bewegen, wobei die Membran 8 umschnappt und die in Fig. 2 am linken Druckschalter 4' gezeigte betätigte Stellung einnimmt. Wie man sieht, ist durch diese Ausbildung insbesondere die dünne und damit auch empfindliche Membran 8 geschützt durch das Gehäuseteil 1 angeordnet.

An dem als Betätigungsorgan dienenden Deckel 7 ist an der dem Inneren des Gehäuseteils 1 zugewandten Seite ein ringförmiger Ansatz 9 angeordnet, der mit einer Kontaktschicht 10 aus leitendem Material, beispielsweise Graphit, Silber, Gold, o. dgl., versehen ist. Mit Hilfe dieser Kontaktschicht 10 können entsprechende Festkontakte, die sich auf einer im Inneren des Gehäuseteils 1 angeordneten Leiterplatte 11 befinden, in der betätigten Stellung des Drucktastenschalters 4' überbrückt werden, womit die entsprechenden Funktionen durch den jeweiligen Drucktastenschalter 4, 4' am Autoradio gesteuert werden. Wie am linken Drucktastenschalter 4' in der Fig. 2 sichtbar ist, wird im betätigten Zustand der weitere Betätigungsweg des Deckels 7 durch den Ansatz 9 begrenzt.

Zur Befestigung der Schalterkappen 5 am Rahmen 2 sind diese mechanisch im Gehäuseteil 1 verankert. Dies wird dadurch erreicht, daß im Gehäuseteil 1 Kanäle 12 ausgebildet sind, in die am Basissockel 6 angeformte Halteteile 13 eingreifen. Diese Halteteile 13 werden beim Einspritzen des Kunststoffs für die Schalterkappen 5 gebildet. Eine weitere Verbesserung der mechanischen Verankerung der Schalterkappen 5 am Gehäuseteil 1 wird durch die Anordnung zusätzlicher Hinterschneidungen 14 für das Halteteil 13 erzielt. Weiter ist es möglich, insbesondere wenn mehrere Drucktastenschalter 4, 4' zu einem Tastenfeld angeordnet sind, wie in Fig. 1 gezeigt ist, die Basissockel 6 der einzelnen Schalterkappen 5 zu einem einzigen, zusammenhängenden Teil fest miteinander zu verbinden (siehe dazu auch die Schnittdarstellung in Fig. 2).

Der Rahmen 2 des Gehäuseteils 1 ist derart ausgestaltet, daß er als Form für das Einspritzen der Schalterkappe 5 dient.

Weiter ist dieser im Bereich des Deckels 7 gleichzeitig derart ausgebildet, daß er eine Führungsfläche 15 für die Betätigung des Deckel 7 bildet. Diese Führungsfläche 15 ist im Gehäuseteil 1 konisch verlaufend ausgebildet.

Wie man besonders gut anhand des rechten Drucktastenschalters 4 in Fig. 2 sieht, sind die Schalterkappen 5 derart im Gehäuseteil 1 angeordnet, daß der Deckel 7 entlang seines Randes im unbetätigten Zustand im wesentlichen bündig mit der Außenoberfläche des Gehäuseteils 1 verläuft. Zur erleichterten Betätigung kann der Deckel 7 an seiner Oberfläche wiederum leicht gewölbt verlaufen. Ansonsten ist der Deckel 7 bevorzugterweise mit zylinderförmiger Gestalt, wie auch der Fig. 1 entnommen werden kann, und einer im wesentlichen kreisförmigen Grundfläche ausgebildet. Die Membran 8 besitzt vorzugsweise die Gestalt der Mantelfläche eines Kegelstumpfes.

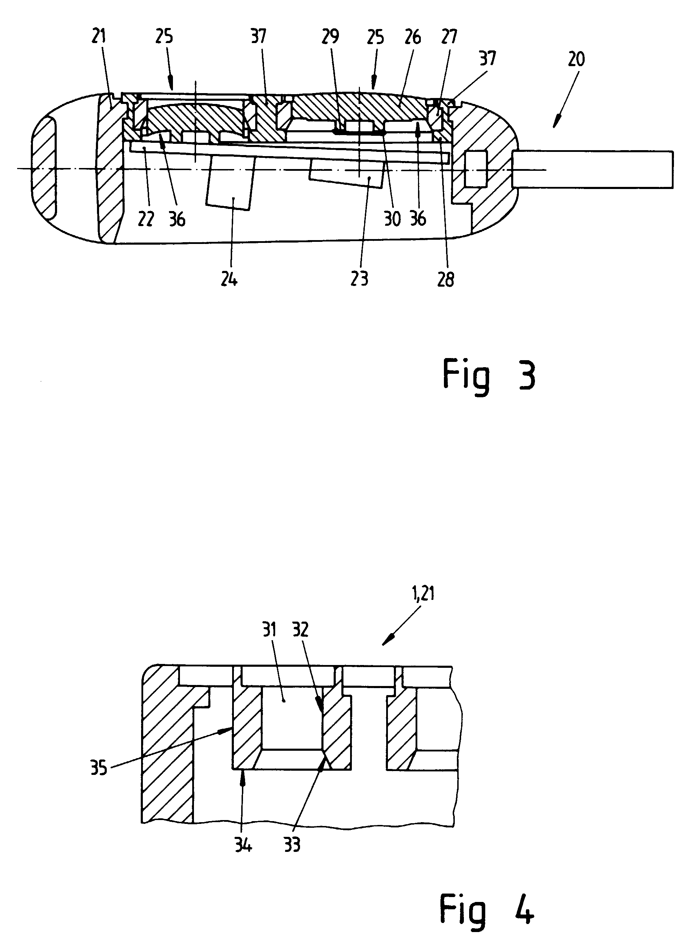

In einem weiteren Ausführungsbeispiel ist in Fig. 3 ein Schnitt durch das Heft eines elektronischen Autoschlüssels 20 gezeigt. Das Heft des Autoschlüssels 20 ist als Gehäuseteil 21 ausgestaltet und enthält eine Leiterplatte 22, auf der ein Chip 23 zur Codierung von Fahrzeugdaten, Benutzerdaten, usw. angeordnet ist. Diese Informationen dienen zur Türöffnung am Auto, für Inspektionen, u. dgl. So erfolgt die Öffnung der Autotüren mittels einer aus einer primären Energiequelle, nämlich der Autobatterie, mit Spannung versorgten Zentralverriegelung auf elektrischem Wege bei Übereinstimmung der im Chip 23 des Autoschlüssels 20 abgespeicherten Daten mit denjenigen, die in einer Elektronik des Fahrzeugs abgelegt sind.

Der Autoschlüssel 20 ist weiter mit einem Sender, beispielsweise einem Infrarot-Sender versehen, der mit einem mit einem Empfänger versehenen Schloß am Fahrzeug zur Fernbetätigung der Zentralverriegelung zusammenwirkt. Um den Infrarot-Sender zu betätigen sowie die weitere Funktionen des Autoschlüssels 20 auszulösen, sind im Heft des Autoschlüssels 20 Drucktastenschalter 25 angeordnet, die wiederum eine aus Deckel 26, Membran 27 und Sockel 28 bestehende Schalterkappe besitzen. Am Deckel 26 befindet sich ein Ansatz 29 mit einer Kontaktschicht 30, die wiederum mit entsprechenden Festkontakten auf der Leiterplatte 22 zusammenwirkt.

Erfindungsgemäß ist das Gehäuseteil 21 aus einem ersten harten Kunststoff ausgebildet und dient als Form, in die die Schalterkappen 36 entsprechend der Ausbildung mit Basissockel 28, Membran 27 und Deckel 26 sowie Halteteil 37 aus einem zweiten Kunststoff, der mit dem Kunststoff des Gehäuseteils 21 keine feste Verbindung eingeht, eingespritzt sind. Dadurch ist gewährleistet, daß wenigstens im Bereich der Membran 27 und des Deckels 26 der Schalterkappe 36 keine feste Verbindung zum Gehäuseteil 21 besteht.

Bei leerer Autobatterie arbeitet die Zentralverriegelung am Fahrzeug jedoch nicht, so daß ein Öffnen der Türen an sich nicht mehr möglich ist. Für diesen Notfall besitzt der Autoschlüssel 20 daher einen auf der Leiterplatte 22 angeordneten sekundären Energiespeicher 24, der wenigstens soviel elektrische Energie beinhalten kann, daß mindestens noch ein einmaliges Betätigen der Zentralverriegelung zum Öffnen der Autotür möglich ist.

Bei der Herstellung der Frontblende für das Autoradio oder das Heft des elektronischen Autoschlüssels wird zunächst das Gehäuseteil 1, 21 in einem ersten Spritzvorgang in einer Form aus einem ersten Kunststoff hergestellt. Wie in Fig. 4 näher zu sehen ist, enthält das Gehäuseteil 1, 21 Öffnungen 31, die zur späteren Aufnahme der Drucktastenschalter 4, 4', 25 vorgesehen sind. Diese Öffnungen 31 sind gleichzeitig als Form mit einer Fläche 32 für den Deckel 7, 26, einer weiteren Fläche 33 für die Membran 8, 27, noch einer weiteren Fläche 34 für den Basissockel 6, 28 und schließlich einer Fläche 35 für das Halteteil 13, 37 ausgebildet. In einem anschließenden zweiten Spritzvorgang werden dann die als Rückstellelemente dienenden Schalterkappen 5, 36 aus einem zweiten Kunststoff, der mit dem ersten Kunststoff des Gehäuseteils 1, 21 keine feste Verbindung eingeht, in das Gehäuseteil 1, 21 eingespritzt wird. Dabei dienen die Flächen 32, 33, 34, 35 als Form für die entsprechenden Teile der Schalterkappe 5, 36. Vorteilhafterweise erübrigt sich damit eine separate Form bei der Herstellung der Schalterkappen 5, 36.

Die Erfindung ist nicht auf die beschriebenen und dargestellten Ausführungsbeispiele beschränkt. Sie umfaßt vielmehr auch alle fachmännischen Weiterbildungen im Rahmen der Patentansprüche. So kann das erfindungsgemäße Gehäuseteil auch an sonstigen elektronischen und elektrischen Geräten, beispielsweise Fernbedienungen für die Unterhaltungselektronik, Taschenrechnern, usw., Verwendung finden.

## Patentansprüche

1. Aus Kunststoff bestehendes Gehäuseteil (1, 21) mit wenigstens einem Drucktastenschalter (4, 4', 25), bei dem eine als Rückstellelement wirkende Schalterkappe (5, 36) aus einer Kunststoff-Spritzmasse o. dgl. angeordnet ist, die einen am Gehäuseteil (1, 21) befestigten Basissockel (6, 28) und einen als Betätigungsorgan zur Überbrückung von Festkontakten dienenden Deckel (7, 26 sowie eine den Basissockel (6, 28) und den Deckel (7, 26) verbindende flexible dünnwandige Membran (8, 27) aufweist, wobei die Schalterkappe (5, 36) in das als Form dienende Gehäuseteil (1, 21) eingespritzt ist und wobei wenigstens im Bereich der Membran (8, 27) und des Deckels (7, 26) der Schalterkappe (5, 36) keine feste Verbindung zum Gehäuseteil (1, 21) besteht, dadurch gekennzeichnet, daß es sich bei dem ersten Kunststoff für das Gehäuseteil (1, 21) und dem zweiten Kunststoff für die Schalterkappe (5, 36) um Kunststoffe handelt, die keine Verbindung miteinander beim Spritzgießen eingehen, und daß das Gehäuseteil (1, 21) derart ausgebildet ist, daß die Schalterkappe (5, 36) mechanisch im Gehäuseteil (1, 21) verankert ist.

2. Gehäuseteil nach Anspruch 1, dadurch gekennzeichnet, daß der erste Kunststoff für das Gehäuseteil (1, 21) härter ist als der zweite Kunststoff für die Schalterkappe (5, 36).

3. Gehäuseteil nach Anspruch 2, dadurch gekennzeichnet, daß es sich bei dem ersten Kunststoff für das Gehäuseteil (1, 21) um ABS, Polyamid, u. dgl. handelt.

4. Gehäuseteil ndch Anspruch 2 oder 3, dadurch gekennzeichnet, daß die Schalterkappe (5, 36) aus einem thermoplastischen Elastomer besteht.

5. Gehäuseteil nach Anspruch 4, dadurch gekennzeichnet, daß es sich bei dem thermoplastischen Elastomer um ein Blockcopolymer handelt, welches aus einem harten kristallinen Segment aus Polybutylen-Terephtalat und einem weichen amorphen Segment auf der Basis langkettiger Polyetherglykole besteht.

6. Gehäuseteil nach einem der Ansprüche 1 bis 5, dadurch gekennzeichnet, daß die Verankerung der Schalterkappe (5, 36) durch Kanäle (12) im Gehäuseteil (1, 21) erfolgt, in die an dem Basissockel (6, 28) der Schalterkappe (5, 36) angeformte Halteteile (13, 37) eingreifen.

7. Gehäuseteil nach Anspruch 6, dadurch gekennzeichnet, daß am Gehäuseteil (1, 21) Hinterschneidungen (14) für die Halteteile (13, 37) angeordnet sind.

8. Gehäuseteil nach einem der Ansprüche 1 bis 7, dadurch gekennzeichnet, daß im Bereich des Deckel (7, 26) der Schalterkappe (5, 36) eine Führungsfläche (15) für die Betätigung des Deckels (7, 26) im Gehäuseteil (1, 21) angeordnet ist.

9. Gehäuseteil nach Anspruch 8, dadurch gekennzeichnet, daß die Führungsfläche (15) im Gehäuseteil (1, 21) konisch verlaufend ausgebildet ist.

10. Gehäuseteil nach einem der Ansprüche 1 bis 9, dadurch gekennzeichnet, daß mehrere Schalterkappen (5, 36) für ein Tastenfeld im Gehäuseteil (1, 21) angeordnet sind, wobei die Basissockel (6, 28) der Schalterkappen (5, 36 zu einem zusammenhängenden Teil miteinander fest verbunden sind.

11. Gehäuseteil nach einem der Ansprüche 1 bis 10, dadurch gekennzeichnet, daß eine mit Festkontakten versehene Leiterplatte (11, 22) im Gehäuseteil (1, 21) angeordnet ist, die mit einer am Deckel (7, 26) der Schalterkappe (5, 36) angebrachten Kontaktschicht (10, 30) bei Betätigung der Schalterkappe (5, 36) zusammenwirken.

12. Gehäuseteil nach Anspruch 11, dadurch gekennzeichnet, daß die Kontaktschicht (10, 30) an einem Ansatz (9, 29) des Deckels (7, 26) angeordnet ist, wobei der Ansatz (9, 29) zur Begrenzung des Betätigungsweges des Deckels (7, 26) dient.

13. Gehäuseteil nach einem der Ansprüche 1 bis 12, dadurch gekennzeichnet, daß die Schalterkappe (5, 36) derart angeordnet ist, daß der Deckel (7, 26) entlang seines Randes im unbetätigten Zustand im wesentlichen bündig mit der Außenoberfläche des Gehäuseteils (1, 21) ist.

14. Gehäuseteil nach einem der Ansprüche 1 bis 13, dadurch gekennzeichnet, daß die Oberfläche des Deckels (7, 26) gewölbt ist.

15. Gehäuseteil nach einem der Ansprüche 1 bis 14, dadurch gekennzeichnet, daß der Deckel (7, 26) eine zylinderförmige Gestalt besitzt.

16. Gehäuseteil nach Anspruch 15, dadurch gekennzeichnet, daß die Grundfläche des Deckels (7, 26) der Schalterkappe (5, 36) im wesentlich kreisförmig ist.

17. Gehäuseteil nach einem der Ansprüche 1 bis 16, dadurch gekennzeichnet, daß die Membran (8, 27 der Schalterkappe (5, 36) die Gestalt der Mantelfläche eines Kegelstumpfs besitzt.

18. Gehäuseteil nach einem der Ansprüche 1 bis 17, dadurch gekennzeichnet, daß es sich bei dem Gehäuseteil (1) um die Frontblende für ein Autoradio handelt.

19. Gehäuseteil nach einem der Ansprüche 1 bis 17, dadurch gekennzeichnet, daß es sich bei dem Gehäuseteil (21) um das Heft eines elektronischen Autoschlüssels (20) handelt, der mit einem Chip (23) zur Speicherung und Codierung von Fahrzeugdaten, Benutzerdaten, usw. versehen ist, wobei durch das Zusammenwirken des Autoschlüssels (20) mit einem elektrischen Schloß am Auto ein Ver- oder Entriegeln des Schlosses mittels eines von einer primären Energiequelle versorgten elektrischen Antriebes erfolgt.

20. Gehäuseteil nach Anspruch 19, dadurch gekennzeichnet, daß der elektronische Autoschlüssel (20) einen sekundären Energiespeicher (24) besitzt, der wenigstens soviel elektrische Energie aufnehmen kann, daß wenigstens ein einmaliges Entriegeln des Schlosses am Auto auch bei leerer primärer Energiequelle möglich ist.

21. Verfahren zur Herstellung eines Gehäuseteils gemäß einem der vorhergehenden Ansprüche, bei dem in einem ersten Spritzvorgang ein Gehäuseteil (1, 21) mit Öffnungen (31) aus einem ersten Kunststoff hergestellt wird, wobei die Öffnungen (31) Flächen (32, 33, 34, 35) für den Deckel (7, 26), die Membran (8, 27), den Basissockel (6, 28) und das Halteteil (13, 37) besitzen, und anschließend in einem zweiten Spritzvorgang die Schalterkappen (5, 36) aus einem zweiten Kunststoff, der mit dem ersten Kunststoff des Gehäuseteils (1, 21) keine feste Verbindung eingeht, in das mit den Flächen (32, 33, 34, 35) der Öffnungen (31) als Form dienende Gehäuseteil (1, 21) derart eingespritzt wird, daß die Schalterkappe (5, 36) mechanisch im Gehäuseteil (1, 21) verankert wird.

## Claims

1. Housing component (1, 21) of plastics material, comprising at least one push-button switch (4, 4', 25), in which a switch cap (5, 36) acting as resetting element of a plastics injection moulding material or the like is disposed, which possesses a base pedestal (6, 28) fixed to the housing component (1, 21) and a lid (7, 26) serving as actuating member for bridging across fixed contacts, and also a flexible, thin-walled membrane (8, 27), connecting together the base pedestal (6, 28) and the lid (7, 26), wherein the switch cap (5, 36) is injection moulded into the housing component (1, 21) serving as mould, and wherein, at least in the region of the membrane (8, 27) and of the lid (7, 26) of the switch cap (5, 36), no fixed connection to the housing component (1, 21) exists, characterized in that the first plastics material for the housing component (1, 21) and the second plastics material for the switch cap (5, 36) are plastics materials that do not form any bond with one another when injection moulded and that the housing component (1, 21) is of such a form that the switch cap (5, 36) is mechanically anchored in the housing component (1, 21).

2. Housing component according to claim 1, characterized in that the first plastics material for the housing component (1, 21) is harder than the second plastics material for the switch cap (5, 36).

3. Housing component according to claim 2, characterized in that the first plastics material for the housing component (1, 21) is ABS, polyamide or the like.

4. Housing component according to claim 2 or 3, characterized in that the switch cap (5, 36) is of a thermoplastic elastomer.

5. Housing component according to claim 4, characterized in that the thermoplastic elastomer is a block copolymer, which consists of a hard crystalline segment of polybutylene-terephthalate and a soft amorphous segment on the basis of long-chain polyether glycols.

6. Housing component according to one of claims 1 to 5, characterized in that the anchoring of the switch cap (5, 36) is provided by channels (12) in the housing component (1, 21), into which engage holding elements (13, 37), integrally moulded on the base pedestal (6, 28) of the switch cap (5, 36).

7. Housing component according to claim 6, characterized in that undercuts (14) for the holding elements (13, 37) are provided on the housing component (1, 21).

8. Housing component according to one of claims 1 to 7, characterized in that a guide surface (15) for the actuation of the lid (7, 26) is disposed in the housing component (1, 21) in the region of the lid (7, 26) of the switch cap (5, 36).

9. Housing component according to claim 8, characterized in that the guide surface (15) in the housing component (1, 21) is of conical form.

10. Housing component according to one of claims 1 to 9, characterized in that a plurality of switch caps (5, 36) for a set of switches is disposed in the housing component (1, 21), the base pedestals (6, 28) of the switch caps (5, 36) being firmly connected to one another to form one cohesive part.

11. Housing component according to one of claims 1 to 10, characterized in that a printed circuit board (11, 22) provided with fixed contacts is disposed in the housing component (1, 21), which contacts cooperate with a contact layer (10, 30) mounted on the lid (7, 26) of the switch cap (5, 36) when the switch cap (5, 36) is actuated.

12. Housing component according to claim 11, characterized in that the contact iayer (10, 30) is disposed on a projection (9, 29) of the lid (7, 26), this projection (9, 29) serving for limiting the actuation travel of the lid (7, 26).

13. Housing component according to one of claims 1 to 12, characterized in that the switch cap (5, 36) is so arranged that the lid (7, 26) is substantially flush along its edge with the outer surface of the housing component (1, 21) in the unactuated state.

14. Housing component according to one of claims 1 to 13, characterized in that the surface of the lid (7, 26) is domed.

15. Housing component according to one of claims 1 to 14, characterized in that the lid (7, 26) has a cylindrical form.

16. Housing component according to claim 15, characterized in that the base area of the lid (7, 26) of the switch cap (5, 36) is substantially circular.

17. Housing component according to one of claims 1 to 16, characterized in that the membrane (8, 27) of the switch cap (5, 36) has the form of the curved surface of a conical frustum.

18. Housing component according to one of claims 1 to 17, characterized in that the housing component (1) is the front panel for an automobile radio.

19. Housing component according to one of claims 1 to 17, characterized in that the housing component (21) is the handle of an electronic automobile key (20), which is provided with a chip (23) for the storage and coding of automobile data, user data etc, a locking or unlocking of the lock by means of an electrical drive supplied from a primary energy source taking place by the cooperation between the automobile key (20) and an electrical lock in the automobile.

20. Housing component according to claim 19, characterized in that the electronic automobile key (20) possesses a secondary energy store (24), which can store at least sufficient electrical energy for at least one unlocking of the lock at the automobile to be possible even when the primary energy source is empty.

21. Method of making a housing component according to one of the preceding claims, wherein, in a first injection operation, a housing component (1, 21) having openings (31) is made from a first plastics material, the openings (31) possessing surfaces (32, 33, 34, 35) for the lid (7, 26), the membrane (8, 27), the base pedestal (6, 28) and the holding element (13, 37), and then, in a second injection operation, the switch caps (5, 36) of a second plastics material that does not form a firm bond with the first plastics material of the housing component (1, 21) is injected into the housing component (1, 21) serving with the surfaces (32, 33, 34, 35) of the openings (31) as a mould, in such a way that the switch cap (5, 36) is mechanically anchored in the housing component (1, 21).

## Revendications

1. Partie de boîtier constituée de matière synthétique (1,21), comportant au moins un interrupteur à bouton-poussoir (4,4',25), dans lequel un capuchon d'interrupteur (5,36) agissant comme élément de rappel, constitué d'une masse injectée de matière synthétique ou analogue, est agencé, qui présente un socle de base (6,28) fixé à la partie de boîtier (1,21) et un couvercle (7,26) servant d'organe d'actionnement pour ponter des contacts fixes, ainsi qu'une membrane souple à paroi mince (8,27) reliant le socle de base (6,28) et le couvercle (7,26), le capuchon d'interrupteur (5,36) étant injecté dans la partie de boîtier (1,21) servant de moule et aucune liaison fixe à la partie de boîtier (1,21) n'existant au moins dans la zone de la membrane (8,27) et du couvercle (7,26) du capuchon d'interrupteur (5,36),
caractérisée en ce que, pour la première matière synthétique pour la partie de boîtier (1,21) et la seconde matière synthétique pour le capuchon d'interrupteur (5,36), il s'agit de matières synthétiques qui n'entraînent aucune liaison entre elles lors du moulage par injection, et en ce que la partie de boîtier (1,21) est réalisée de sorte que le capuchon d'interrupteur (5,36) est ancré mécaniquement dans la partie de boîtier (1,21).

2. Partie de boîtier selon la revendication 1,
caractérisée en ce que la première matière synthétique pour la partie de boîtier (1,21) est plus dure que la seconde matière synthétique pour le capuchon d'interrupteur (5,36).

3. Partie de boîtier selon la revendication 2,
caractérisée en ce que, pour la première matière synthétique pour la partie de boîtier (1,21), il s'agit de ABS, polyamide et analogue.

4. Partie de boîtier selon la revendication 2 ou 3,
caractérisée en ce que le capuchon d'interrupteur (5,36) est constitué d'un élastomère thermoplastique.

5. Partie de boîtier selon la revendication 4,
caractérisée en ce que, pour l'élastomère thermoplastique, il s'agit d'un copolymère bloc, lequel est constitué d'un segment cristallin dur en polybutylènetéréphtalate et d'un segment amorphe tendre sur la base de polyétherglycols à chaîne longue.

6. Partie de boîtier selon une des revendications 1 à 5,
caractérisée en ce que l'ancrage du capuchon d'interrupteur (5,36) est effectué dans la partie de boîtier (1,21) par des canaux (12) dans lesquels s'engagent des parties de maintien (13,37) formées sur le socle de base (6,28) du capuchon d'interrupteur (5,36).

7. Partie de boîtier selon la revendication 6,
caractérisée en ce que, sur la partie de boîtier (1,21), sont agencées des contre-dépouilles (14) pour les parties de maintien (13,37).

8. Partie de boîtier selon une des revendications 1 à 7,
caractérisée en ce que, dans la zone du couvercle (7,26) du capuchon d'interrupteur (5,36), il est agencé une surface de guidage (15) pour l'actionnement du couvercle (7,26) dans la partie de boîtier (1,21).

9. Partie de boîtier selon la revendication 8,
caractérisée en ce que la surface de guidage (15) est réalisée dans la partie de boîtier (1,21) en s'étendant de façon conique.

10. Partie de boîtier selon une des revendications 1 à 9,
caractérisée en ce que plusieurs capuchons d'interrupteur (5,36) sont agencés dans la partie de boîtier (1,21) pour un clavier, les socles de base (6,28) des capuchons d'interrupteur (5,36) étant solidaires les uns des autres pour former une pièce continue.

11. Partie de boîtier selon une des revendications 1 à 10,
caractérisée en ce qu'une plaquette conductrice (11,22), munie de contacts fixes, est agencée dans la partie de boîtier (1,21), qui coopère avec une couche de contact (10,30) prévue sur le couvercle (7,26) du capuchon d'interrupteur (5,36) lors de l'actionnement du capuchon d'interrupteur (5,36).

12. Partie de boîtier selon la revendication 11,
caractérisée en ce que la couche de contact (10,30) est agencée sur une saillie (9,29) du couvercle (7,26), la saillie (9,29) servant à limiter la course d'actionnement du couvercle (7,26).

13. Partie de boîtier selon une des revendications 1 à 12,
caractérisée en ce que le capuchon d'interrupteur (5,36) est agencé de sorte que le couvercle (7,26), le long de son bord, dans l'état non actionné, est généralement à fleur de la surface externe de la partie de boîtier (1,21).

14. Partie de boîtier selon une des revendications 1 à 13,
caractérisée en ce que la surface supérieure du couvercle (7,26) est bombée.

15. Partie de boîtier selon une des revendications 1 à 14,
caractérisée en ce que le couvercle (7,26) présente une forme cylindrique.

16. Partie de boîtier selon la revendication 15,
caractérisée en ce que la surface de base du couvercle (7,26) du capuchon d'interrupteur (5,36) est généralement circulaire.

17. Partie de boîtier selon une des revendications 1 à 16,
caractérisée en ce que la membrane (8,27) du capuchon d'interrupteur (5,36) présente la forme de la surface d'enveloppe d'un tronc de cône.

18. Partie de boîtier selon une des revendications 1 à 17,
caractérisée en ce que, concernant la partie de boîtier (1), il s'agit de la façade pour un autoradio.

19. Partie de boîtier selon une des revendications 1 à 17,
caractérisée en ce que, concernant la partie de boîtier (21), il s'agit de la partie de préhension d'une clé électronique d'automobile (20), qui est munie d'une puce (23) pour mémoriser et coder des données du véhicule, des données de l'utilisateur etc..., un verrouillage ou un déverrouillage de la serrure étant effectué au moyen d'un entraînement électrique alimenté par une source d'énergie primaire par la coopération de la clé d'automobile (20) avec une serrure électrique sur l'automobile.

20. Partie de boîtier selon la revendication 19,
caractérisée en ce que la clé électronique d'automobile (20) possède un accumulateur d'énergie secondaire (24) qui peut recevoir au moins autant d'énergie électrique qu'au moins un déverrouillage exceptionnel de la serrure, sur l'automobile, est également possible quand la source d'énergie primaire est vide.

21. Procédé pour fabriquer une partie de boîtier selon une des revendications précédentes, dans lequel, dans une première étape d'injection, une partie de boîtier (1,21) ayant des ouvertures (31) est fabriquée en une première matière synthétique, les ouvertures (31) possédant des surfaces (32,33,34,35) pour le couvercle (7,26), la membrane (8,27), le socle de base (6,28), et la partie de maintien (13,37), et, ensuite, dans une seconde étape d'injection, le capuchon d'interrupteur (5,36), en une seconde matière synthétique qui n'entraîne pas de liaison fixe avec la première matière synthétique de la partie de boîtier (1,21), est injecté dans la partie de boîtier (1,21) servant de moule avec les surfaces (32,33,34,35) des ouvertures (31), de sorte que le capuchon d'interrupteur (5,36) est ancré mécaniquement dans la partie de boîtier (1,21).
